# FASCICULE DE BREVET EUROPEEN

(11) **EP 3 465 275 B1**
(45) Date de publication et mention de la délivrance du brevet: **29.04.2020**
(21) Numéro de dépôt: 17727152.5
(22) Date de dépôt: 23.05.2017
(51) Int. Cl.: G01T 1/04

(54) **DOSIMÈTRE BI OU TRIDIMENSIONNEL A MATERIAU RADIOSENSIBLE DE TYPE GEL OU POLYMERE SOLIDE CHARGÉ AVEC DES PARTICULES DE DIAMANT ET PROCÉDÉS ASSOCIÉS**
2- ODER 3-DIMENSIONALER DOSIMETER MIT STRAHLUNGSEMPFINDLICHER GEL- ODER FESTER POLYMER MATRIX UND DISPERSIERTE DIAMANT PARTIKEL
2- OR 3-DIMENSIONAL DOSIMETER BASED ON A GEL- OR SOLID POLYMER-TYPE RADIOSENSITIVE MATERIAL MATRIX COMPRISING DIAMOND PARTICLES DISPERSED THEREIN

(30) Priorité: 25.05.2016 FR 1654672
(43) Date de publication de la demande: 10.04.2019
(73) Titulaire: Commissariat à l'Energie Atomique et aux Energies Alternatives, 75015 Paris (FR)
(72) Inventeur: SIMIC, Vesna, 92370 Chaville (FR); TROMSON, Dominique, 91440 Bure surYvette (FR); ARNAULT, Jean-Charles, 78120 Rambouillet (FR); BERGONZO, Philippe, 91300 Massy (FR); GIRARD, Hugues, 78220 Viroflay (FR); LAZARO, Delphine, 91430 Vauhallan (FR)
(74) Mandataire: Brevalex
(86) Numéro de dépôt international: PCT/EP2017/062363
(87) Numéro de publication internationale: WO 2017/202819

(56) Documents cités:
- CA-A1- 2 507 831
- FR-A1- 2 993 180
- US-A1- 2011 081 724
- BORJANOVIC VESNA ET AL: "Polymer nanocomposites with improved resistance to ionizing radiation", JOURNAL OF VACUUM SCIENCE & TECHNOLOGY B: MICROELECTRONICS AND NANOMETER STRUCTURES, AMERICAN INSTITUTE OF PHYSICS, 2 HUNTINGTON QUADRANGLE, MELVILLE, NY 11747, vol. 30, no. 4, 1 juillet 2012 (2012-07-01), pages 41803-41803, XP012162863, ISSN: 2166-2746, DOI: 10.1116/1.4724310 [extrait le 2012-06-05]

## Description

### DOMAINE TECHNIQUE

La présente invention concerne un dosimètre 2D ou 3D amélioré, son procédé de fabrication, ainsi qu'un procédé de mesure de dose à l'aide de ce dosimètre.

L'invention trouve notamment des applications dans le domaine de la radiothérapie, ainsi que dans le domaine de la radioprotection.

### ÉTAT DE LA TECHNIQUE ANTÉRIEURE

En radiothérapie, la dosimétrie (ou mesure de dose) in vivo (DIV) consiste en la mesure d'une dose de rayonnement ionisant lors d'une séance de radiothérapie en présence du patient, ce qui permet de détecter une possible erreur de dosage.

Actuellement, la DIV est réalisée à l'aide de détecteurs ponctuels, actifs (c'est-à-dire à lecture immédiate) ou passifs (c'est-à-dire à lecture différée), tels que des diodes, des MOSFETs, des dosimètres thermo-luminescents ou des dosimètres à stimulation optique, qui sont placés sur le patient en entrée du faisceau (c'est-à-dire sur la peau du patient et sur l'axe du faisceau), et sont couplés ou non avec une mesure de dose en sortie du patient. La détermination de la dose au point de traitement se fait ensuite par calculs à partir de la dose mesurée en entrée du patient et éventuellement en sortie du patient.

L'utilisation de ces détecteurs ponctuels (qui, comme leur nom l'indique, permettent d'obtenir une mesure de la dose en un point) est cependant inadaptée pour des techniques avancées de radiothérapie utilisant des faisceaux complexes, tels que, par exemple, les faisceaux de RCMI (Radiothérapie Conformationnelle avec Modulation d'Intensité), les faisceaux d'arcthérapie et les faisceaux issus d'accélérateurs robotisés utilisés en radiothérapie stéréotaxique (Cyberknife™). Pour ces nouvelles techniques, il est nécessaire d'obtenir une dosimétrie en 2D, voire en 3D, avec une résolution en dose et une résolution spatiale élevées. Pour ce faire, il faut envisager un dosimètre de type 2D ou 3D qui puisse être positionné directement sur le patient pour la mesure de DIV. Le dosimètre doit donc être souple, afin de s'adapter à la morphologie du patient ; il doit également pouvoir être réalisé dans des tailles différentes et doit être le moins perturbant possible pour la mesure de dose.

Dans l'art antérieur, les nanoparticules de diamant sont utilisées pour améliorer la résistance du polymère à des rayonnements ionisants (Polymer nanocomposites with improved résistance to ionizing radiation. Borjanovic et al., J.Vac.Sci.Technol. B 30(4), Jul/Aug 2012) ou pour générer sous irradiation des radicaux libres à visée thérapeutique et/ou diagnostique, p.e. pour traiter un tumeur cancéreuse (FR2993180A1 ). L'art antérieur du CA2507831 et du US20110081724 comprend l'utilisation de CNTs dont la defonctionalisation après irradiation les rende des conducteurs (CA'831) ou la dégradation du polymère sous irradiation qui permet des ponts de conduction entre les nanotubes de carbone. Le changement de conductivité permet donc d'améliorer la performance de détection des dosimètres.

La dosimétrie est également utile en radioprotection, notamment dans les domaines de la médecine nucléaire et de la radiologie interventionnelle.

La médecine nucléaire regroupe toutes les utilisations de radionucléides sous forme de sources non scellées à des fins de diagnostic ou de thérapie. L'opérateur, en médecine nucléaire, se trouve exposé aux rayonnements ionisants, en particulier ses extrémités.

La radiologie interventionnelle regroupe quant à elle les techniques qui utilisent la radioscopie avec amplificateur de brillance ou la radiographie et qui nécessitent des équipements spécifiques permettant de réaliser certaines opérations, dans un but diagnostique ou thérapeutique. Ces techniques nécessitent souvent des expositions de longue durée des patients, qui reçoivent alors des doses importantes pouvant être à l'origine, dans certains cas, d'effets déterministes dus aux rayonnements. Les opérateurs ou les praticiens sont également exposés à des niveaux plus élevés que lors d'autres pratiques radiologiques.

Dans les deux cas de médecine nucléaire et de radiologie interventionnelle, des incidents de surexposition du patient, de l'opérateur ou du praticien peuvent être relevés, dus généralement à une mauvaise pratique, mais également à une dosimétrie négligée. En particulier, l'information sur le dépassement de dose est souvent obtenue *a postériori* par une dosimétrie passive et pas assez précise. On peut citer, à titre d'exemple, des résultats d'études de l'IRSN menées en radiologie interventionnelle qui ont montré que la dosimétrie avec des bagues ou des dosimètres poignets était insuffisamment précise pour assurer un bon suivi des praticiens. La dose estimée sur les extrémités des doigts serait en effet six fois plus élevée que celle lue par une bague. En outre, les dosimètres bagues ou poignets sont souvent des dosimètres passifs basés sur la luminescence (technologie TLD (Dosimétrie par Thermo Luminescence) et technologie OSL (dosimétrie par Luminescence Stimulée Optiquement)). Ce type de dosimètres absorbe et emmagasine l'énergie délivrée par les rayonnements ionisants suite à une irradiation et la restitue par la suite via une stimulation spécifique.

Afin d'obtenir une mesure de dose qui soit cumulée directement pendant l'intervention (et non *a postériori* comme avec les dosimètres bagues ou poignets) et qui soit plus précise en positionnement sur le patient, il serait intéressant de pouvoir disposer de dosimètres de type 2D ou 3D, qui soient souples et qui puissent être positionnés directement sur le patient ou sur le bout des doigts du praticien.

Pour la réalisation de dosimètres 3D, on utilise actuellement des matériaux radiosensibles sous forme de gels ou de polymères solides pour obtenir une lecture 2D ou 3D de la dose délivrée. Il est à noter que le terme « solide » est ici associé au polymère pour le différencier du gel, qui est un polymère gonflé de solvant.

Parmi ces matériaux radiosensibles, il existe principalement deux catégories de matériaux, à savoir les gels dosimétriques et les polymères radiosensibles sans solvant.

### • Les gels dosimétriques

Les gels dosimétriques sont couramment utilisés pour la réalisation de fantômes, notamment pour le contrôle des faisceaux. Ils sont définis comme un réseau tridimensionnel (également appelé matrice) de chaînes de polymère réticulées dans un solvant. On obtient ainsi un réseau macromoléculaire ou supramoléculaire gonflé par le solvant. Les gélifiants classiquement utilisés sont soit des polymères naturels (agarose, gélatine, etc.), soit des polymères de synthèse (polyacrylamide, alcool polyvinylique, etc.).

Les gels dosimétriques intègrent deux grandes classes de gels, qui se distinguent par des mécanismes de révélation de la dose absorbée différents :

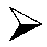 les gels polymérisables

Les gels polymérisables (connus sous la dénomination anglaise « polymer gel ») se composent d'un solvant (généralement de l'eau) à 80-90% en poids d'un mélange de monomères (< 5% en poids) et d'un gélifiant (gélatine, agarose, polyacrylamides, etc.). Sous l'influence d'un rayonnement ionisant, des espèces radicalaires capables d'amorcer la polymérisation des monomères sont générées. Ces espèces radicalaires proviennent principalement de la radiolyse du solvant. La polymérisation s'accompagne d'une opacification et d'un changement de viscosité du milieu réactionnel, que l'on quantifie de différentes manières et qui permet de remonter à la dose reçue sur deux ou trois dimensions. Ces gels se caractérisent par une bonne résolution spatiale, la diffusion y étant limitée par des réactions de réticulation radio-induites qui figent rapidement les chaines polymères.

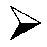 les gels polymérisés radiochromiques

Ces gels sont connus sous la dénomination anglaise « radiochromic gel ». Dans ce type de gels, la matrice du gel est déjà polymérisée et ne sert qu'à limiter la diffusion des colorants dans le volume du matériau. L'exemple le plus connu est le gel de Fricke à base d'ions ferreux (Fe²⁺) et de xylénol orange (XO) pour lequel on mesure, par différentes méthodes, l'oxydation radiolytique de l'ion ferreux en ion ferrique (Fe³⁺). L'une des méthodes classiquement utilisée est la spectrophotométrie où le complexe Fe³⁺-XO est utilisé comme révélateur colorimétrique de la réaction d'oxydo-réduction radio-induite. Une autre technique couramment utilisée est la résonnance magnétique où l'on mesure les propriétés paramagnétiques des ions mis en jeu.

### • Les polymères radiosensibles sans solvant

Les polymères radiosensibles sans solvant (dénomination souvent raccourcie en « polymères radiosensibles ») sont principalement constitués d'un polymère et de différents additifs (colorants, agents antioxydants, etc.) nécessaires au bon fonctionnement du dosimètre. Contrairement aux gels, ils ne comportent pas de solvant. Un exemple d'un dosimètre utilisant un tel polymère radiosensible est décrit dans le document [1]. Le dosimètre y est décrit comme étant composé d'une matrice polymère à base d'un polyuréthane, cette matrice étant dopée avec un chromophore et un amorceur de radicaux. Sous l'effet d'un rayonnement ionisant, le chromophore est modifié chimiquement, passant d'une forme où la molécule est transparente à une forme où elle devient absorbante.

Quels que soient les matériaux radiosensibles sous forme de gels ou de polymères solides qui sont utilisés dans les dosimètres 2D ou 3D actuels, on cherche toujours à améliorer leur sensibilité.

A cet effet, l'incorporation de nanoparticules de numéro atomique (Z) élevé dans un polymère a récemment été reportée dans la littérature pour la réalisation de dosimètres en radiothérapie. On citera notamment les articles de Alqathami et al et de Rahman et al sur l'incorporation, respectivement, de particules d'oxyde de bismuth (document [2]) ou de nanoparticules d'or (documents [3] et [4]) dans un polymère.

Les auteurs de ces articles ont mis en évidence un effet d'augmentation de la dose observée par absorbance dans la partie du polymère chargée avec des nanoparticules de Z élevé (Or (Z=79) ; Bismuth (Z=83)), comparée à la mesure faite dans la partie du même polymère non chargée.

Ainsi, il semblerait que l'incorporation de nanoparticules de Z élevé dans des matériaux radiosensibles sous forme de gels ou de polymères solides permette d'effectuer une dosimétrie dans une gamme d'énergies qui peut aller du keV au MeV. Cependant, étant donné que le processus d'interaction induisant l'augmentation de dose est basé sur l'augmentation d'absorption du rayonnement dans les nanoparticules de Z élevé, l'incorporation de ces nanoparticules de Z élevé dans des matériaux équivalents tissus peut induire une dépendance en énergie du dosimètre, en particulier dans le domaine des basses énergies (keV), ce qui implique une procédure de correction en énergie qui peut être fastidieuse pour une utilisation en routine clinique.

Au final, si l'on souhaite pouvoir procéder à une utilisation clinique du dosimètre pour des mesures sur une large gamme d'énergies (keV et MeV), sans avoir à appliquer de facteurs correctifs pour conserver une équivalence tissu du matériau du dosimètre, l'incorporation de nanoparticules de Z élevé doit se limiter à un taux faible (un maximum d'environ 2%).

Au vu des inconvénients des dosimètres de l'art antérieur, les inventeurs se sont fixé pour but de concevoir un dosimètre qui puisse être utilisé pour une utilisation clinique, que ce soit en radiothérapie ou en radioprotection, et qui présente des performances de détection accrues, afin qu'il présente une meilleure sensibilité et ce, pour une détection sur une large gamme d'énergies pouvant aller du keV au MeV, tout en conservant l'équivalence tissu du détecteur.

### EXPOSÉ DE L'INVENTION

Pour ce faire, les inventeurs ont conçu un dosimètre pour la détection d'un rayonnement ionisant, comprenant une matrice polymère en un matériau radiosensible, dans laquelle sont dispersées des particules aptes à produire des radicaux libres lorsqu'elles sont exposées au rayonnement ionisant, le dosimètre étant caractérisé en ce que lesdites particules sont des particules de diamant ayant une taille submicrométrique ou nanométrique et dont la surface possède une affinité électronique négative.

Le matériau radiosensible peut être du type gel (comme les gels dosimétriques, y compris les gels polymérisables et les gels polymérisés radiochromiques) ou du type polymère solide (comme les polymères radiosensibles sans solvant).

L'incorporation de particules de diamant de tailles nanométriques (ces particules étant également appelées nanoparticules) ou submicrométriques dans un matériau radiosensible permet d'améliorer les performances de détection du dosimètre en lui permettant une meilleure sensibilité, tout en conservant l'équivalence tissu du dosimètre.

Dans l'art antérieur, l'incorporation de nanoparticules de Z élevé vise à augmenter la probabilité d'interaction du rayonnement ionisant dans le matériau radiosensible et ainsi augmenter la sensibilité du dosimètre. Cependant, l'augmentation de la concentration du matériau en nanoparticules de Z élevé se traduit par une augmentation du numéro atomique effectif du dosimètre, qui n'est plus, de ce fait, « équivalent tissu » (c'est-à-dire qu'il n'a plus le même Z que les tissus humains).

Dans le cadre de l'invention, contrairement aux particules de Z élevé, comme l'or ou l'oxyde de bismuth de l'art antérieur, les particules de diamant (constituées majoritairement de carbone) ont un numéro atomique effectif bas, ce qui ne permet pas une absorption efficace des rayonnements ionisants. Le mécanisme qui est utilisé ici est l'émission d'électrons à partir de la surface des particules de diamant, cette émission étant due à l'affinité électronique négative des particules de diamant. Ces électrons émis sont capables de réagir avec le milieu environnant et de produire de nouvelles espèces (ions, radicaux libres, etc.), qui viennent s'ajouter à celles produites dans le matériau radiosensible par les différentes réactions chimiques radio-induites ayant lieu en l'absence de particules de diamant, ce qui a pour effet d'amplifier la réponse du dosimètre.

En outre, il est connu que les particules de diamant ont un effet radiosensibilisant (document [5]). Dans le cadre de l'invention, on utilise cet effet radiosensibilisant des particules de diamant dû à la production de radicaux libres additionnels pour augmenter l'efficacité de réaction chimique du matériau radiosensible chargé par rapport à un matériau radiosensible vierge.

Ainsi, par comparaison avec l'incorporation de nanoparticules de Z élevé, notre invention permet de conserver la propriété essentielle d'équivalence tissu recherchée pour un dosimètre. Cette incorporation permet en outre de s'affranchir de la nécessité d'appliquer une correction à basse énergie, nécessaire dans les matrices polymères chargées aux nanoparticules de Z élevé. Le fait d'avoir un effet radiosensibilisant permettrait au final d'abaisser les seuils de détection du dosimètre.

Le dosimètre selon l'invention permet d'obtenir une carte dosimétrique bi ou tridimensionnelle. En effet, la dose de rayonnements ionisants reçue par le dosimètre peut être mesurée et quantifiée par diverses méthodes de mesures connues et donne ainsi accès à la distribution bi ou tridimensionnelle des doses de rayonnements ionisants auxquelles le matériau radiosensible a été exposé.

Avant d'entrer plus en détail dans l'exposé de l'invention, nous précisons les définitions suivantes.

Dans ce qui précède et ce qui suit, le terme « taille », appliqué à des particules, désigne la plus grande dimension de ces particules; le terme « nanométrique » signifie supérieur ou égal à 1 nanomètre et inférieur ou égal à 100 nanomètres; le terme « submicrométrique » signifie supérieur à 100 nanomètres et inférieur à 1000 nanomètres.

Un matériau radiosensible est un matériau qui a au moins une de ses propriétés physico-chimiques (par exemple, une propriété optique telle que sa viscosité, sa transparence, sa couleur, etc.) qui est modifiée lors de l'absorption d'un rayonnement ionisant, cette modification pouvant être reliée à la dose d'irradiation reçue par le matériau, ce qui permet une information directe du patient, du praticien et/ou de l'opérateur de la dose absorbée.

Enfin, on rappelle que les rayonnements ionisants comprennent les rayonnements électromagnétiques de longueurs d'onde inférieures à 100 nm, c'est-à-dire les rayons gamma, les rayons X et certains ultraviolets, ainsi que les particules, chargées ou non (rayons alpha et béta).

Selon la présente invention, les particules de diamant ont une surface ayant une affinité électronique négative. Concernant l'affinité électronique, on considère dans le cadre de la présente invention la définition selon la physique du solide (c'est-à-dire la particule de diamant) et non à l'échelle de l'atome ou de la molécule, à une interface du matériau étudié (particule de diamant) avec le vide. Cette affinité électronique (AE) est définie par la différence d'énergie entre le bas de la bande de conduction du matériau (E_{C}) et le niveau du vide (E_{VAC}), soit E_{AE} = E_{VAC}- E_{C}. Dans le cas du diamant, la nature des atomes saturant la dernière couche de carbone (c'est-à-dire les « terminaisons de surface » de la particule de diamant) module cette affinité. En utilisant certains atomes particuliers, comme par exemple des atomes d'hydrogène ou des fonctions aminées, on obtient une particule de diamant ayant une affinité électronique négative (i.e. E_{C}>E_{VAC}). Cette affinité électronique sera généralement comprise entre - 0,2 et -1,0 eV, selon la taille des particules de diamant et la qualité des terminaisons.

Selon une variante préférée de l'invention, les particules de diamant ont une surface hydrogénée.

Selon une autre variante possible de l'invention, les particules de diamant ont une surface aminée.

De préférence, les particules de diamant ont une taille comprise entre 5 et 200 nm. Cette gamme de tailles des particules permet d'avoir une surface développée maximale.

Selon un mode de réalisation préféré de l'invention, les particules sont réparties de manière homogène dans la matrice polymère. L'homogénéité de la répartition des particules est directement liée à l'homogénéité du dosimètre.

De préférence, les particules de diamant sont présentes dans la matrice polymère en une concentration d'au moins 0,001 mg par cm³ de la matrice polymère.

Selon un mode de réalisation préféré de l'invention, la matrice polymère est souple. On considère que la matrice polymère est souple dès lors qu'elle présente une déformation en flexion supérieure ou égale à une valeur limite déterminée (que l'homme du métier est capable de déterminer) lorsqu'une pression déterminée est appliquée sur la surface de la matrice. Plus simplement, on considérera que la matrice polymère est souple dès lors qu'on peut l'adapter à la morphologie du patient.

L'invention concerne également un procédé de fabrication d'un dosimètre tel que défini ci-dessus. Ce procédé comprend une étape de formation de la matrice polymère chargée avec des particules de diamant ayant une taille submicrométrique ou nanométrique et une étape de mise en forme de ladite matrice polymère chargée, le procédé comprenant, au cours de la formation de la matrice polymère chargée, l'incorporation des particules de diamant de manière à ce que les particules de diamant soient dispersées dans la matrice polymère chargée une fois formée.

L'étape de formation de la matrice polymère chargée peut comprendre les opérations suivantes :
a) mélange des composants chimiques nécessaires à la formation de la matrice polymère ;
b) introduction et dispersion des particules de diamant dans le mélange, moyennant quoi on obtient un mélange chargé ;
c) mise en forme du mélange chargé.

De préférence, la dispersion des particules est une dispersion homogène. Il existe de nombreuses techniques permettant de disperser de manière homogène les particules de diamant dans la matrice polymère, comme par exemple, un mélange par agitation conventionnelle (mécanique), un mélange par bain à ultrasons, un mélange par sonde de sonification, etc.

Selon une variante possible du procédé, l'opération c) de mise en forme peut comprendre une introduction du mélange chargé dans un moule, une polymérisation du mélange chargé pour obtenir une pièce moulée et un démoulage de ladite pièce. Cette variante peut être mise en œuvre en utilisant un matériau radiosensible de type polymère solide.

Selon une autre variante possible du procédé, l'opération c) de mise en forme comprend une introduction du mélange chargé dans une cavité fermée délimitée par une paroi et destinée à contenir ledit mélange chargé. Cette variante peut être mise en œuvre en utilisant un matériau radiosensible de type gel, par exemple un gel dosimétrique. Bien entendu, la paroi est choisie transparente au système de lecture utilisé pour lire la dosimétrie.

Enfin, l'invention concerne un procédé de mesure d'une dose de rayonnement ionisant, comprenant les étapes consistant à :
a) soumettre un dosimètre tel que défini ci-dessus à un rayonnement ionisant, le dosimètre fournissant une réponse qui est fonction de la dose de rayonnement ionisant absorbé par le matériau radiosensible ;
b) lire la réponse du dosimètre exposé au rayonnement ionisant.

La réponse du dosimètre peut par exemple être un changement de couleur de la matrice polymère, une opacification de la matrice polymère, etc.

La lecture de la réponse du dosimètre se fait par une technique connue. Elle peut par exemple être réalisée par Imagerie par Résonnance Magnétique (IRM), par tomographie optique, par tomographie par rayons X, par spectrométrie RAMAN, par spectrométrie d'absorption, par RPE, etc.

Il est à noter que pour favoriser les réactions chimiques avec les électrons produits à la surface des particules de diamant de tailles submicrométriques ou nanométriques utilisées selon l'invention, il est possible d'immobiliser, au voisinage des sites de productions de ces électrons, les molécules susceptibles de réagir avec ces électrons. Ceci peut se faire via des liaisons covalentes ou des interactions électrostatiques entre les particules de diamant et les molécules d'intérêt (colorant, monomères, etc.). En effet, le parcours des molécules réactives au sein de la matrice polymère est assez faible et il est donc préférable que les molécules réactives soient à proximité des particules de diamant pour être au plus près des sites de production des électrons. Une manière de favoriser les réactions entre les électrons et les molécules réactives est soit d'avoir une forte concentration en molécules réactives au sein de la matrice polymère et/ou en particules de diamant, soit d'immobiliser sur les particules de diamant les molécules réactives (en les liant chimiquement aux particules de diamant, par exemple). La fonctionnalisation des particules de diamant a donc deux fonctions, à savoir favoriser les réactions de révélation de la dose déposée, d'une part, et, d'autre part, favoriser leur incorporation dans la matrice polymère.

Au final, l'utilisation de particules de diamant d'affinité électronique négative (ces particules ayant de préférence une surface hydrogénée ou aminée) pour améliorer la réponse du matériau radiosensible (gel ou polymère) présente de nombreux avantages.

Cela permet de ne pas altérer l'équivalence tissu du matériau radiosensible, puisqu'on y incorpore des objets de tailles nanométriques ou submicrométriques présentant de faibles numéros atomiques. Les taux d'incorporation de ces particules sont ajustables en fonction des applications visées. Par exemple, avec des particules de diamant ayant une surface hydrogénée, on peut envisager des taux d'incorporation élevés (pour maximiser les effets), contrairement à ce qui est réalisable avec les nanoparticules de Z élevé de l'art antérieur.

Par ailleurs, la chimie de surface du diamant est bien connue et il est tout à fait possible de fonctionnaliser les particules de diamant pour optimiser leur incorporation dans la matrice polymère.

La présence de particules de diamant ne perturbe pas la lecture du matériau radiosensible, même lorsque cette lecture se fait par IRM. En effet, les particules de diamant ne sont pas électriquement conductrices, contrairement aux nanoparticules métalliques, et ne risquent pas d'atténuer le champ magnétique de l'IRM.

Enfin, les polymères composites (gels ou polymères solides) dopés aux particules de diamant sont plus facilement recyclables que ceux contenant des nanoparticules métalliques.

D'autres caractéristiques et avantages de l'invention ressortiront du complément de description qui suit et qui se rapporte à des exemples de mise en œuvre du procédé de fabrication selon l'invention.

Il va de soi que ce complément de description n'est donné qu'à titre d'illustration de l'objet de l'invention et ne doit en aucun cas être interprété comme une limitation de cet objet.

### EXPOSÉ DÉTAILLÉ DE MODES DE RÉALISATION PARTICULIERS

Comme nous venons de le voir, la présente invention repose sur l'utilisation de matériaux (gels ou polymères solides) radiosensibles, classiquement décrits dans la littérature pour la réalisation de fantômes pour la mesure de dose 3D en radiothérapie, auxquels sont ajoutés des particules de diamant de tailles nanométriques ou submicrométriques ayant une affinité électronique négative pour en améliorer la sensibilité. Plus particulièrement, le principe de l'invention est basé sur une modification du matériau radiosensible sous irradiation, les particules de diamant de tailles nanométriques ou submicrométriques ayant une affinité électronique négative étant présentes dans le matériau pour augmenter l'effet des rayonnements irradiants, tout en conservant l'équivalence tissu du matériau, nécessaire en dosimétrie. De préférence, on utilise des particules de diamant ayant une surface hydrogénée ou aminée.

Le dosimètre ainsi obtenu permet la mesure de dose in vivo en radiothérapie, ainsi que la mesure de dose en radioprotection pour la radiologie interventionnelle et la médecine nucléaire. Par extension, le dosimètre selon l'invention pourra être utilisé en radioprotection dans le domaine nucléaire ou pour la réalisation de fantôme pour le contrôle qualité en radiothérapie. On peut également envisager la possibilité de réaliser des mesures de dose hors champ en radiothérapie à l'aide du dosimètre selon l'invention. On peut également envisager la création de divers appareils de radioprotection utilisant ce dosimètre pour l'industrie du nucléaire.

Les gels radiosensibles et les polymères solides radiosensibles satisfont aux critères fixés pour la réalisation de dosimètres 2D ou 3D adaptés à une utilisation en radiothérapie et en radioprotection. En effet, ils permettent de réaliser des dosimètres souples dans des tailles différentes et peu perturbants pour la mesure de dose.

Différentes morphologies pour le dosimètre selon l'invention sont possibles, du fait même des propriétés des matériaux radiosensibles utilisés (souplesse, possibilité d'en fabriquer de grandes surfaces, etc.).

On peut ainsi envisager d'inclure la matrice polymère chargée à l'intérieur d'un masque thermoformé ou d'une ceinture flexible destinée à être posée directement sur le patient, sous forme de pastilles à positionner en surface du masque ou de la ceinture, ou à l'intérieur des fibres constituant le masque ou la ceinture.

Le dosimètre selon l'invention peut être envisagé en médecine nucléaire et en radiologie interventionnelle, par exemple pour la réalisation de gants équipés d'une ou plusieurs pastilles repositionnables réalisées en polymère solide souple, disposée(s) sur un ou plusieurs doigts des gants et permettant d'intégrer la dose reçue sur plusieurs séances avec, pour avantage, la possibilité d'avoir un effet visuel de seuil toléré grâce à un changement de couleur.

Une application de l'invention pourrait être étendue à la réalisation de gants jetables entièrement réalisés à l'aide d'un matériau radiosensible de type gel ou polymère solide chargé avec des nanoparticules de diamant à affinité électronique négative, de préférence à surface hydrogénée ou aminée, ou encore des gants présentant une double paroi remplie avec le matériau radiosensible dopé aux particules de diamant à affinité électronique négative, de préférence à surface hydrogénée ou aminée.

Le matériau radiosensible peut être un polymère naturel ou de synthèse ou encore un mélange de monomères.

Le matériau radiosensible peut être choisi parmi les grandes familles de polymères transparents ou translucides comme les polycarbonates, le polystyrène et ses dérivés, les polyoléfines, les poly(méth)acrylates comme, par exemple, le polyméthacrylate de méthyle (PMMA), les dérivés de polyvinyles, les dérivés de polyesters, le chlorure de polyvinyle, les dérivés de cellulose tels que l'acétate de cellulose, les polyuréthanes, les polyéthylènes, les téréphtalates, les silicones, les époxydes, etc. Des exemples de tels polymères transparents ou translucides sont par exemple cités dans le document [1]. Les matériaux radiosensibles peuvent par exemple être obtenus par polymérisation en chaine ou par polycondensation.

Les monomères classiquement utilisés pour la fabrication de gels dosimétriques sont des monomères hydrosolubles polymérisables par voie radicalaire. Les familles décrites dans la littérature sont les (méth)acrylamides, les (méth)acrylates, les acides (méth)acryliques, le méthacrylate de sodium, le méthacrylate de 2-hydroxyéthyle. L'ajout d'un agent de réticulation (monomères bi ou trifonctionnels appartenant aux mêmes familles que les monomères « simples », comme par exemple le bis acrylamide) permet de figer le matériau et de conserver la distribution spatiale de la dose déposée.

D'autres monomères hydrosolubles qui ne semblent pas avoir été utilisés jusqu'à présent pour la fabrication de gels radiosensibles pourraient être employés : alcool vinylique, 1-vinyl-2-pyrrolidone (NVP), acétate de vinyle, acrylonitrile, vinyle pyridine, etc.

Bien entendu, le choix du matériau radiosensible se fera également en fonction des propriétés attendues du matériau, à savoir le fait qu'il soit compatible avec les éventuels autres constituants du dosimètre, tels que le colorant, l'agent antioxydant pour les gels dosimétriques, l'amorceur radicalaire, l'agent stabilisant anti-UV, le plastifiant, etc.). Il doit également présenter les propriétés mécaniques adéquates (notamment du point de vue de la plasticité) en fonction de l'utilisation envisagée.

Si l'on souhaite observer un changement de couleur dans le matériau radiosensible suite à une irradiation, le matériau radiosensible devra inclure au moins un composé chimique actif apte à changer de couleur sous l'effet d'une réaction photochimique induite par l'exposition à un rayonnement ionisant. Dans ce cas, il est nécessaire que le matériau radiosensible ait une transparence suffisante pour permettre une détection de ce changement de couleur. A titre d'exemple, on peut utiliser comme colorant un des précurseurs cyanés incolores du 4,4',4"-aminotriphénylméthane (pararosaniline) ou l'un de ses dérivés.

Les particules de diamant utilisées pour doper le matériau radiosensible ont une taille nanométrique ou submicrométrique. De préférence, les particules sont des nanoparticules.

Les particules de diamant utilisées peuvent être obtenues de plusieurs façons, à savoir par détonation, par ablation laser ou encore par la technique Haute Pression Haute Température.

Les particules de diamant ne sont pas utilisées brutes, mais leur chimie de surface est modifiée pour obtenir les propriétés recherchées de radiosensibilisation, afin qu'elles soient aptes à produire des radicaux libres lorsqu'elles sont exposées au rayonnement ionisant ; plus précisément, elles sont modifiées de manière à ce qu'elles présentent une affinité électronique négative, afin qu'elles soient aptes à produire à leur surface des électrons lorsqu'elles sont exposées au rayonnement ionisant (document [5]). De préférence, on traite les particules afin d'obtenir des particules de diamant ayant une surface hydrogénée (liaisons C-H en surface) ou aminée (liaisons C-N<, par exemple, C-NH-R (par exemple C-NH-CH₃) ou C-NH₂). Le traitement des particules pour qu'elles aient une surface hydrogénée ou aminée est connu et n'est pas décrit ici. A titre d'illustration, on peut consulter le document [6] pour savoir comment traiter des particules de diamant afin d'obtenir des particules de diamant à surface hydrogénée.

L'incorporation des particules de diamant dans le matériau radiosensible peut se faire de différentes manières. On peut par exemple les disperser par simple agitation au barreau magnétique durant la synthèse du polymère/gel avant la polymérisation. Afin qu'elles soient dispersées de manière homogène, on peut utiliser une dispersion par sonication. L'homogénéisation peut également être complétée par une agitation durant la polymérisation.

Les nanoparticules peuvent être également incorporées en voie liquide lorsqu'il s'agit de gel polymère sans solvant. Les nanoparticules sont alors dispersées dans l'eau et ensuite incorporées au gel polymère.

Le matériau radiosensible chargé en particules de diamant est ensuite mis en forme, ce qui peut être extrêmement variable selon les applications visées.

Le dosimètre est ensuite irradié. Les rayonnements ionisants peuvent être des rayons UV, X (keV ou MeV), alpha, beta, gamma (MeV). Toutes les techniques d'irradiation connues sont visées par l'invention.

Le système de lecture pour réaliser la mesure de dose sera adapté à l'application visée. La mesure de dose peut s'effectuer par toutes les méthodes connues. A titre d'exemples, la mesure de dose peut consister en une mesure du changement d'opacité du matériau radiosensible dopé aux particules de diamant hydrogénées, une mesure d'un changement dans le spectre d'absorption de ce matériau, ou encore des mesures par IRM.

### REFERENCES CITEES

**[1]** WO 2004/079393 A2
**[2]** Alqathami M. et al. « Enhancement of radiation effects by bismuth oxide nanoparticles for kilovoltage x-ray beams: A dosimetric study using a novel multi-compartment 3D radiochromic dosimeter », Journal of Physics: Conference Series 444, 012025 (2013)
**[3]** Alqathami M. et al. « Novel multicompartment 3-dimensional radiochromic radiation dosimeters for nanoparticle-enhanced radiation therapy dosimetry », Int. J. Radiat. Oncol. Biol. Phys., 84(4), pages 549-55 (November 15, 2012)
**[4]** Rahman W. N. et al. « Polymer gels impregnated with gold nanoparticles implemented for measurements of radiation dose enhancement in synchrotron and conventional radiotherapy type beams », Australas. Phys. Eng. Sci. Med., 35(3), pages 301-9 (2012)
**[5]** Grall R. et al. « Impairing the radioresistance of cancer cells by hydrogenated nanodiamonds », Biomaterials, 61, pages 290-8 (2015)
**[6]** Girard H. et al. « Surface properties of hydrogenated nanodiamonds : a chemical investigation », Phys. Chem. Chem. Phys., 13, pages 11517-11523 (2011)

## Revendications

1. Dosimètre pour la détection d'un rayonnement ionisant, comprenant une matrice polymère en un matériau radiosensible, dans laquelle sont dispersées des particules aptes à produire des radicaux libres lorsqu'elles sont exposées au rayonnement ionisant, le dosimètre étant **caractérisé en ce que** lesdites particules sont des particules de diamant ayant une taille submicrométrique ou nanométrique et dont la surface possède une affinité électronique négative.

2. Dosimètre selon la revendication 1, dans lequel les particules de diamant ont une surface hydrogénée.

3. Dosimètre selon la revendication 1, dans lequel les particules de diamant ont une surface aminée.

4. Dosimètre selon l'une quelconque des revendications 1 à 3, dans lequel les particules de diamant ont une taille comprise entre 5 et 200 nm.

5. Dosimètre selon l'une quelconque des revendications 1 à 4, dans lequel les particules sont réparties de manière homogène dans la matrice polymère.

6. Dosimètre selon l'une quelconque des revendications 1 à 5, dans lequel les particules de diamant sont présentes en une concentration d'au moins 0,001 mg par cm³ de la matrice polymère.

7. Dosimètre selon l'une quelconque des revendications 1 à 6, dans lequel la matrice polymère est souple.

8. Procédé de fabrication d'un dosimètre tel que défini dans l'une quelconque des revendications 1 à 7, comprenant une étape de formation de la matrice polymère chargée avec des particules de diamant ayant une taille submicrométrique ou nanométrique et une étape de mise en forme de ladite matrice polymère chargée, le procédé comprenant, au cours de la formation de la matrice polymère chargée, l'incorporation des particules de diamant de manière à ce que les particules de diamant soient dispersées dans la matrice polymère chargée une fois formée.

9. Procédé selon la revendication 8, dans lequel l'étape de formation de la matrice polymère chargée comprend les opérations suivantes :
a) mélange des composants chimiques nécessaires à la formation de la matrice polymère ;
b) introduction et dispersion des particules de diamant dans le mélange, moyennant quoi on obtient un mélange chargé ;
c) mise en forme du mélange chargé.

10. Procédé selon la revendication 9, dans lequel l'opération c) de mise en forme comprend une introduction du mélange chargé dans un moule, une polymérisation du mélange chargé pour obtenir une pièce moulée et un démoulage de ladite pièce.

11. Procédé selon la revendication 9, dans lequel l'opération c) de mise en forme comprend une introduction du mélange chargé dans une cavité fermée délimitée par une paroi et destinée à contenir ledit mélange chargé.

12. Procédé de mesure d'une dose de rayonnement ionisant, comprenant les étapes consistant à :
a) soumettre un dosimètre tel que défini dans l'une quelconque des revendications 1 à 7 à un rayonnement ionisant, le dosimètre fournissant une réponse qui est fonction de la dose de rayonnement ionisant absorbé par le matériau radiosensible ;
b) lire la réponse du dosimètre exposé au rayonnement ionisant.

## Patentansprüche

1. Dosimeter zum Erfassen einer ionisierender Strahlung, enthaltend eine Polymermatrix aus einem strahlungsempfindlichen Material, in der Teilchen dispergiert sind, die dazu geeignet sind, freie Radikale zu erzeugen, wenn sie der ionisierenden Strahlung ausgesetzt werden,
wobei das Dosimeter **dadurch gekennzeichnet ist, dass** die Teilchen Diamantteilchen mit submikrometrischer oder nanometrischer Größe sind und deren Oberfläche eine negative Elektronenaffinität besitzt.

2. Dosimeter nach Anspruch 1,
wobei die Diamantteilchen eine hydrierte Oberfläche haben.

3. Dosimeter nach Anspruch 1,
wobei die Diamantteilchen eine Amin-Oberfläche haben.

4. Dosimeter nach einem der Ansprüche 1 bis 3,
wobei die Diamantteilchen eine Größe zwischen 5 und 200 nm haben.

5. Dosimeter nach einem der Ansprüche 1 bis 4,
wobei die Teilchen in der Polymermatrix homogen verteilt sind.

6. Dosimeter nach einem der Ansprüche 1 bis 5,
wobei die Diamantteilchen in einer Konzentration von mindestens 0,001 mg pro cm³ der Polymermatrix vorliegen.

7. Dosimeter nach einem der Ansprüche 1 bis 6,
wobei die Polymermatrix nachgiebig ist.

8. Verfahren zum Herstellen eines Dosimeters nach einem der Ansprüche 1 bis 7, umfassend einen Schritt der Bildung der mit Diamantteilchen mit einer submikrometrischen oder nanometrischen Größe beladenen Polymermatrix und einen Schritt der Formung der beladenen Polymermatrix, wobei das Verfahren während der Bildung der beladenen Polymermatrix das Einbringen der Diamantteilchen umfasst, so dass die Diamantteilchen in der beladenen Polymermatrix nach deren Bildung dispergiert werden.

9. Verfahren nach Anspruch 8,
wobei der Schritt der Bildung der beladenen Polymermatrix die folgenden Vorgänge umfasst:
a) Mischen der chemischen Komponenten, die zur Bildung der Polymermatrix erforderlich sind;
b) Einbringen und Dispersion der Diamantteilchen in dem Gemisch, wodurch ein beladenes Gemisch erhalten wird;
c) Formen des beladenen Gemischs.

10. Verfahren nach Anspruch 9,
wobei der Vorgang c) des Formens ein Einbringen des beladenen Gemischs in eine Gießform, eine Polymerisation des beladenen Gemischs zum Erhalten eines Formteils und die Entformung dieses Teils umfasst.

11. Verfahren nach Anspruch 9,
wobei der Vorgang c) des Formens ein Einbringen des beladenen Gemischs in einen geschlossenen Hohlraum umfasst, der durch eine Wand begrenzt und dazu bestimmt ist, das beladene Gemisch zu enthalten.

12. Verfahren zum Messen einer Dosis ionisierender Strahlung, das die folgenden Schritte umfasst:
a) Aussetzen eines Dosimeters nach einem der Ansprüche 1 bis 7 einer ionisierenden Strahlung, wobei das Dosimeter eine Reaktion liefert, die Funktion von der Dosis der vom strahlungsempfindlichen Material absorbierten ionisierenden Strahlung ist;
b) Ablesen der Reaktion des der ionisierenden Strahlung ausgesetzten Dosimeters.

## Claims

1. A dosimeter for detecting an ionizing radiation, comprising a polymeric matrix of a light-sensitive material, in which particles able to produce free radicals when exposed to the ionizing radiation, are dispersed, the dosimeter being **characterized in that** said particles are diamond particles having a submicron or nano size and the surface of which has a negative electron affinity.

2. The dosimeter according to claim 1, wherein the diamond particles have a hydrogenated surface.

3. The dosimeter according to claim 1, wherein the diamond particles have an amino surface.

4. The dosimeter according to any of claims 1 to 3, wherein the diamond particles have a size between 5 and 200 nm.

5. The dosimeter according to any of claims 1 to 4, wherein the particles are homogeneously distributed in the polymeric matrix.

6. The dosimeter according to any of claims 1 to 5, wherein the diamond particles are present at a concentration of at least 0.001 mg per cm³ of the polymeric matrix.

7. The dosimeter according to any of claims 1 to 6, wherein the polymeric matrix is flexible.

8. A method for manufacturing a dosimeter as defined in any of claims 1 to 7, comprising a step of forming the polymeric matrix loaded with diamond particles having a submicron or nano size and a step of shaping said loaded polymeric matrix, the method comprising, while forming the loaded polymeric matrix, incorporating diamond particles so that the diamond particles are dispersed in the loaded polymeric matrix once formed.

9. The method according the claim 8, wherein the step of forming the loaded polymeric matrix comprises the following operations of:
a) mixing the chemical components necessary for forming the polymeric matrix;
b) introducing and dispersing diamond particles in the mixture, whereby a loaded mixture is obtained;
c) shaping the loaded mixture.

10. The method according to claim 9, wherein the shaping operation c) comprises introducing the loaded mixture into a mold, polymerizing the loaded mixture to obtain a moulded part and removing said part from the mould.

11. The method according to claim 9, wherein the shaping operation c) comprises introducing the loaded mixture into a closed cavity bounded by a wall and for containing said loaded mixture.

12. A method for measuring an ionizing radiation dose, comprising the steps of:
a) subjecting a dosimeter as defined in any of claims 1 to 7 to an ionizing radiation, the dosimeter providing a response which is a function of the ionizing radiation dose absorbed by the radiosensitive material;
b) reading the response of the dosimeter exposed to the ionizing radiation.
